Europäisches Patentamt

European Patent Office

Office européen des brevets

(11) Numéro de publication : **0 326 462 B1**

(12) **FASCICULE DE BREVET EUROPEEN**

(45) Date de publication du fascicule du brevet :
**15.04.92 Bulletin 92/16**

(51) Int. Cl.⁵ : **B60T 1/08**

(21) Numéro de dépôt : **89400145.2**

(22) Date de dépôt : **18.01.89**

(54) **Installation de freinage de véhicules à dispositif d'antiblocage des roues et ralentisseur à commande contrôlée.**

(30) Priorité : **22.01.88 FR 8800715**

(43) Date de publication de la demande :
**02.08.89 Bulletin 89/31**

(45) Mention de la délivrance du brevet :
**15.04.92 Bulletin 92/16**

(84) Etats contractants désignés :
**AT BE CH DE ES GB IT LI NL SE**

(56) Documents cités :
**EP-A- 0 241 872**
**FR-A- 2 105 051**
**FR-A- 2 183 614**
**GB-A- 2 057 611**
**GB-A- 2 080 458**
**US-A- 4 150 542**

(73) Titulaire : **LABAVIA S.G.E.**
**5, avenue Newton Parc d'Activités**
**F-78180 Montigny le Bretonneux (FR)**

(72) Inventeur : **Gernot, Philippe**
**14 Rue des pavillons Résidence Bellerive**
**F-92800 Puteaux (FR)**

(74) Mandataire : **Picard, Jean-Claude Georges et al**
**Cabinet Plasseraud 84, rue d'Amsterdam**
**F-75009 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention concerne une installation de freinage de véhicules à dispositif d'antiblocage des roues et ralentisseur à commande contrôlée, du type comportant des premiers moyens d'interdiction de ladite commande du ralentisseur au moins à partir de l'instant d'une demande de régulation adressée audit dispositif d'antiblocage des roues.

Il est tout d'abord rappelé que les ralentisseurs sont des dispositifs propres à ralentir le véhicule avant et pendant l'action effective des freins, par l'intermédiaire d'une commande manuelle ou au pied actionnée par le chauffeur. Les ralentisseurs électromagnétiques, couramment utilisés, comprennent un nombre n de voies de commutation indépendantes fournissant chacune une partie du couple ralentisseur. Un tel type de ralentisseur peut être commandé par l'intermédiaire de manocontacts préréglés progressivement (hydrauliques ou pneumatiques), insérés dans le circuit de freinage, ou par l'intermédiaire d'interrupteurs intégrés ou non au bloc de pédale de frein, agissant successivement selon l'enfoncement de cette pédale et fournissant ainsi la commande, position par position, et sous certaines conditions d'autorisation, des n positions de fonctionnement du ralentisseur. On peut également prévoir la commutation d'une ou de plusieurs voies du ralentisseur pour chaque enclenchement de manocontact ou d'interrupteur.

Ceci étant, le rôle des premiers moyens mentionnés plus haut est bien entendu d'interdire le fonctionnement du ralentisseur lorsque le dispositif d'antiblocage des roues détecte un glissement jugé critique. En effet, si le ralentisseur (à commande manuelle et/ou au pied) continuait son action à ce moment-là, le risque de glissement des roues serait augmenté, ce qui contrarierait l'action dudit dispositif.

Pour que les dispositifs d'antiblocage puissent assumer cette fonction connue de contrôle du ralentisseur, ils comportent une borne dite "de régulation" à partir de laquelle on prélève l'information voulue.

Ces dispositifs comportent également une borne dite "d'alarme" qui commande un voyant de défaut situé au tableau de bord du véhicule, et à partir de laquelle on peut également contrôler le ralentisseur, et empêcher aussi la commande de son fonctionnement en cas de défaillance du dispositif d'antiblocage des roues. On comprend en effet que si ce dispositif ne fonctionne pas ou fonctionne de façon défectueuse, il convient d'empêcher le fonctionnement du ralentisseur pour ne pas augmenter encore le risque de glissement des roues du véhicule.

Il est encore connu, dans les installations de freinage du type en question, d'utiliser une information de vitesse, issue par exemple d'un tachygraphe électronique ou d'une minigénératrice fixée sur la boîte de vitesses, pour interdire la commande du ralentisseur lorsque le véhicule est à basse vitesse (vitesse inférieure à un seuil déterminé) ou à l'arrêt. Le ralentisseur électromagnétique consommant du courant, cela évite de le commander inutilement.

En résumé, on voit que dans les installations de freinage connues --et comme cela pourra également être le cas pour une installation de freinage conforme à la présente invention-- le fonctionnement du ralentisseur pourra être interdit :
- en cas d'une demande de régulation parvenant au dispositif d'antiblocage des roues ;
- en cas de défaillance de ce dispositif ; et
- lorsque le véhicule est à l'arrêt ou à basse vitesse.

Le brevet britannique BOSCH n° 2 057 611 décrit un système de freinage de véhicule à ralentisseur et dispositif antiblocage des roues dans lequel un dispositif de contrôle régule, à partir du comportement des roues, l'actionnement des freins ainsi que du ralentisseur. Le résultat est simplement une action d'antiblocage des roues, même quand seul le ralentisseur est en action.

Le brevet français WESTINGHOUSE n° 2 183 614 décrit un système de freinage du même type général, mais dans lequel, après suppression ou diminution de l'enrayage des roues, on déclenche le processus de reprise simultanée du freinage de service et du freinage par le frein ralentisseur, si celui-ci est toujours actionné (voir page 4, lignes 17 à 19 du document).

Le brevet européen CSEPEL AUTOGYAR n° 241 872 ne fait que décrire des moyens permettant de diminuer le couple de freinage en cas de blocage d'une des roues, ceci par mesure de la variation brusque de la vitesse angulaire de l'arbre moteur.

La présente invention porte sur les conditions de réautorisation de la commande du ralentisseur après une interdiction de son fonctionnement, notamment lorsqu'elle est consécutive à une demande de régulation parvenant au dispositif d'antiblocage des roues.

Dans d'autres installations connues, cette réautorisation est acquise juste après la fin d'une demande de régulation adressée du dispositif d'antiblocage des roues, la remise en service du ralentisseur n'étant cependant autorisée que progressivement, position par position (voie par voie ou par groupements de voies), avec une temporisation à chaque fois entre deux positions successives, ceci pour éviter une remise en route trop brutale du ralentisseur.

Cette solution connue présente l'inconvénient d'entraîner une plus grande instabilité du dispositif d'antiblocage des roues. En effet, le fait que le ralentisseur puisse réintervenir presque immédiatement après la fin de la régulation d'antiblocage peut susciter, dans des conditions de faible adhérence ou avec un véhicule faiblement chargé, un glissement suffisant pour redéclencher ledit dispositif avant la fin du freinage. En d'autres termes, même avec la précaution d'une remise en service progressive et temporisée du ralentisseur en commande au pied (ou manuelle), le dispositif d'antiblocage des roues peut être, dans certaines conditions liées au revêtement de la chaussée ou au véhicule, perturbé par la remise en service du ralentisseur pendant le freinage.

Le but de la présente invention est d'éviter ces inconvénients de la technique antérieure.

A cet effet, une installation de freinage du type général défini au début sera, conformément à la présente invention, essentiellement caractérisée en ce qu'elle comporte des moyens de réautorisation de la mise en service du ralentisseur propres à recevoir une information de freinage et à ne réautoriser cette mise en service qu'à partir de l'instant d'une nouvelle demande de freinage.

Pour ce faire, il suffira de disposer d'une information "freinage" en plus d'une ou de plusieurs de celles des installations connues qui ont été mentionnées plus haut (informations sur le fonctionnement régulateur du dispositif d'antiblocage ou sur sa défaillance ; information tachymétrique).

Cette information "freinage" pourra être fournie par exemple par le premier manocontact hydraulique ou pneumatique (calibré à plus faible pression), d'une rampe de manocontacts installée dans la circuiterie hydraulique ou pneumatique du circuit de freinage, ou encore par le premier interrupteur (le premier à se fermer) d'une rampe d'interrupteurs associée à la pédale de frein.

Ainsi, le premier manocontact ou interrupteur fournira l'information "freinage" voulue, et les suivants permettront de déclencher la commande des différentes positions de fonctionnement du ralentisseur.

Une solution plus simple pour obtenir l'information de freinage voulue, et ne nécessitant pas l'utilisation d'une rampe de manocontacts ou d'interrupteurs, pourrait consister à utiliser le manocontact ou le voyant des feux de stop, ou encore un interrupteur commandé par la pédale de frein, ce qui serait moins onéreux. Dans ce cas, on peut prévoir en outre de commander simultanément plusieurs positions du ralentisseur.

Comme cela ressort déjà de ce qui précède, l'invention concerne surtout les conditions de réautorisation de la commande du ralentisseur après une interdiction intervenant au moins à partir de l'instant d'une demande de régulation adressée audit dispositif d'antiblocage des roues.

Bien entendu, cette réautorisation pourra être acquise dans les mêmes conditions, après une interdiction ayant d'autres causes, en particulier une défaillance du dispositif d'antiblocage des roues ou encore du fait que la vitesse du véhicule tombe au-dessous d'une valeur prédéterminée, ceci d'une façon connue en soi.

Une installation conforme à l'invention pourra donc encore être caractérisée en ce qu'elle comporte des seconds moyens d'interdiction de la commande du ralentisseur en cas de défaillance du dispositif d'antiblocage des roues et/ou en ce qu'elle comporte des troisièmes moyens d'interdiction de la commande du ralentisseur lorsque la vitesse du véhicule tombe au-dessous d'une valeur prédéterminée.

Il est bien entendu également que, dans une installation conforme à l'invention, on pourra encore mettre en oeuvre la disposition connue selon laquelle lesdits moyens de réautorisation de la mise en service du ralentisseur sont agencés de sorte à ne réautoriser cette mise en service que progressivement, position par position, avec une temporisation à chaque fois entre deux positions successives.

On combine ainsi les dispositions avantageuses de la présente invention avec celles de la technique antérieure.

L'invention sera mieux comprise à la lecture de la description suivante, donnée uniquement à titre d'exemple, avec référence aux figures du dessin annexé dans lequel :

– la figure 1 est un chronogramme explicatif simplifié ;

– la figure 2 est un exemple simplifié des circuits d'une telle installation ;

– la figure 3 est un chronogramme fonctionnel montrant le fonctionnement des circuits de la figure 2 ;

– la figure 4 est un schéma synoptique fonctionnel du module électronique d'une installation conforme à l'invention ;

– les figures 5 à 9 sont des chronogrammes des différentes fonctions ; et

– la figure 10 est une variante du schéma synoptique de la figure 4.

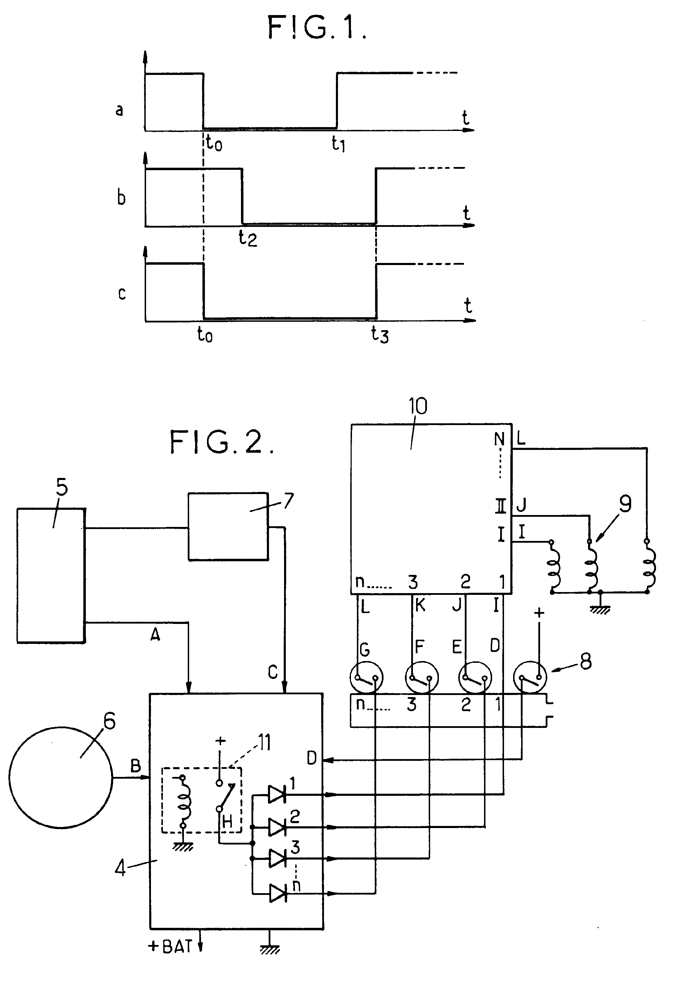

Sur la figure 1 on a représenté :

– en (a) l'information de régulation du dispositif d'antiblocage des roues en fonction du temps t, le fonctionnement normal (absence de régulation) étant représenté par les créneaux positifs et une demande de régulation étant représentée par le niveau O ;

– en (b) l'information de freinage, une demande de freinage étant représentée par les créneaux positifs, et l'absence de freinage par le niveau O ;

– en (c) une commande au pied du ralentisseur, l'autorisation de cette commande étant représentée par les créneaux positifs et son interdiction par le niveau O.

On voit sur la figure 1 que la régulation du dispositif d'antiblocage commence à $t_0$, après un certain temps de freinage, pour se terminer à $t_1$. A ce même temps $t_0$, la commande au pied du ralentisseur devient interdite. Avec les installations de la technique antérieure, cette commande du ralentisseur est réautorisée en $t_1$, c'est-à-dire dès la fin de la demande de régulation du dispositif d'antiblocage des roues. Selon la caractéristique essentielle de l'invention, cette réautorisation n'intervient qu'en $t_3$, à l'instant d'une nouvelle demande de freinage (l'interruption du premier freinage étant intervenue en $t_2$).

Sur la figure 2 on a référencé :

– en 4 un boîtier de commande au pied du ralentisseur, dans une installation de freinage conforme à l'invention, ce boîtier recevant des informations fournies par un dispositif 5 d'antiblocage des roues et une information vitesse B fournie par un tachygraphe électronique 6. Le dispositif 5 peut fournir au boîtier 4 soit une information régulation C, par l'intermédiaire d'une relais de régulation 7, soit une information alarme A ; et

– en 8 une rampe à manocontacts référencés 1, 2, 3... n est associée au circuit de freinage et est connectée aux différents bobinages d'un ralentisseur 9 par l'intermédiaire d'une boîte à contacteurs 10.

Le premier manocontact 1 fournit une information de freinage D au boîtier de commande 4.

Ceci étant, lorsque ce boîtier 4 autorise la commande au pied en H, il y a commutation du relais électromagnétique ou statique de sortie 11, et les diodes 1, 2, 3,... n conduisent alors le + de l'alimentation :

. directement à la position 1 du ralentisseur, qui est alors commandé sur sa première position I ; et

. aux manocontacts 2... n qui, lorsque la pression due à l'enfoncement de la pédale de frein est suffisante, commutent le + de l'alimentation pour exciter la boîte à contacteurs 10, réalisant ainsi la commande du ralentisseur, position par position sur les autres positions J... L.

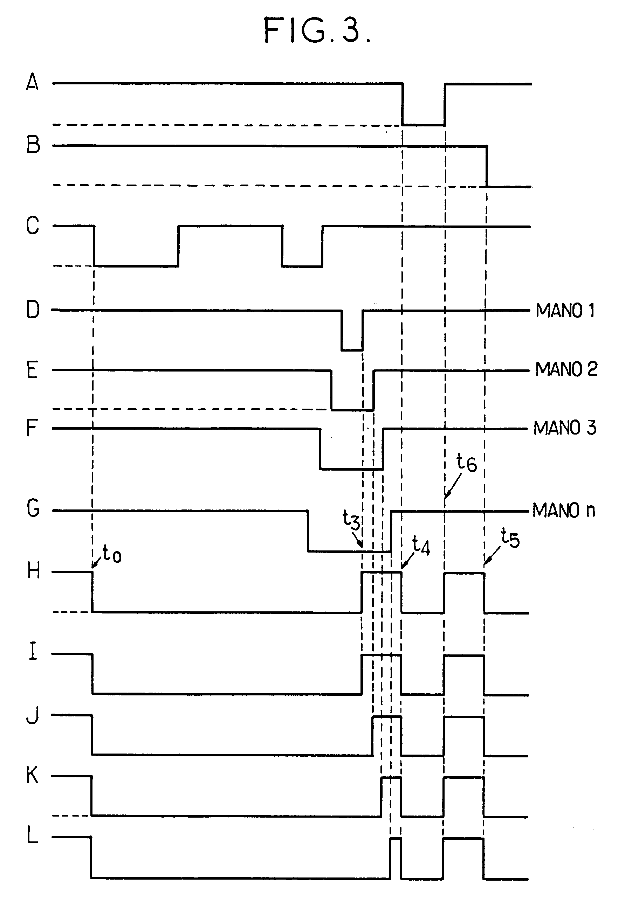

Sur la figure 3, on a utilisé les mêmes repères A à L que sur la figure 2 pour désigner les mêmes connexions :

– en A le signal d'alarme du dispositif d'antiblocage des roues 5 ; l'alarme est représentée par le niveau bas du signal ;

– en B le signal de basse vitesse ou d'arrêt, le niveau bas de ce signal traduisant l'arrêt ou une vitesse inférieure au seuil de basse vitesse ;

– en C le signal de régulation du dispositif d'antiblocage, une demande de régulation étant représentée par le niveau bas de ce signal ;

– en D, E, F, G, le niveau des manocontacts 1 d'information freinage, et 2 à n de commande du niveau de ralentissement ; le niveau haut représente les manocontacts enclenchés, et le niveau bas leur ouverture ;

– en H le signal d'autorisation de la commande au pied du ralentisseur, le niveau bas représentant l'interdiction de cette commande au pied.

On voit sur cette partie du diagramme que l'interdiction de la commande au pied du ralentisseur intervient en $t_0$, dès qu'intervient la demande de régulation du dispositif d'antiblocage des roues (diagramme C), et ne se termine qu'en $t_3$, lors d'une nouvelle demande de freinage (diagramme D). On voit également ici que l'interdiction de la commande au pied du ralentisseur peut intervenir en $t_4$ en cas d'alarme sur le dispositif d'antiblocage des roues (diagramme A), ou encore en $t_5$, en cas de vitesse inférieure au seuil de basse vitesse (diagramme B). En $t_6$, on voit que la fin du signal d'alarme A réautorise la commande au pied du ralentisseur.

– en I à L, les niveaux de commande, respectivement 1, 2, 3 et N du ralentisseur. On voit sur ces diagrammes la corrélation entre l'enclenchement des manocontacts 1 à n (diagrammes D à G) et les niveaux de commande respectifs du ralentisseur.

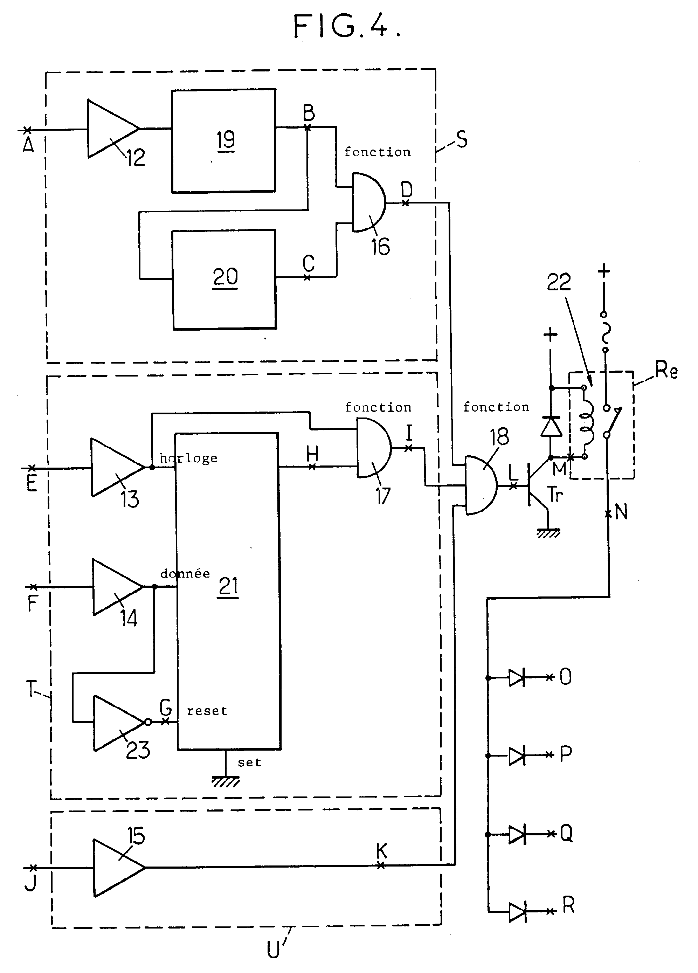

La figure 4 représente un schéma synoptique fonctionnel du module électronique d'une installation conforme à l'invention. Sur cette figure, les lettres A à R ne correspondent pas aux lettres utilisées sur les figures 2 et 3 :

– A désigne l'information vitesse ;

– E l'information freinage ;

– F l'information régulation du dispositif d'antiblocage des roues ;

– J l'information d'alarme de ce dispositif ; lorsque les points d'entrée sont déconnectés, par sécurité, les différents points A, E, F, J sont imposés à un état bas pour rendre inactives les différentes fonctions concernées ;

– O, P, Q, R désignent les sorties des diodes vers la commande au pied du ralentisseur ;

– les références 12 à 15 désignent des circuits de mise en forme des signaux ;

– les références 16 à 18 désignent des circuits ET ;

– les références 19 et 20 désignent des circuits monostables réenclenchables ;

– la référence 21 désigne une bascule de données de type flip-flop ;

– la référence 22 désigne un relais de commutation ;

– la référence 23 désigne un inverseur.

Les différentes fonctions assurées par ce module sont schématisées par un bloc S assurant la fonction coupure à basse vitesse, T assurant la fonction régulation du ralentisseur, et U assurant la fonction sécurité.

## I. LA FONCTION COUPURE BASSE VITESSE

La fonction coupure à basse vitesse peut être utilisée avec l'étage de sortie représenté sur la figure 4, en excluant les fonctions régulation ralentisseur et sécurité. Un module de coupure à basse vitesse est ainsi réalisé.

Le type de traitement de l'information utilisé dans la fonction coupure à basse vitesse présente un caractère innovateur intéressant. En effet, les différentes coupures à basse vitesse du marché utilisent un principe d'intégration et/ou de monostable (réenclenchable) utilisant l'information vitesse. Ces dispositifs présentent l'inconvénient, à faible vitesse (en dessous du seuil de vitesse de coupure) d'engendrer des petites pulsations au rythme des impulsions de l'information vitesse, ce qui autorise la commande du ralentisseur pendant de brefs instants, suscitant des à-coups de commande indésirables (déclenchement intempestif autorisé du ralentisseur ; usure par commutation intempestive du relais de l'étage de sortie de la fonction coupure à basse vitesse).

L'information vitesse A issue d'une minigénératrice ou d'un tachygraphe est une information pulsée dont la période T des pulsations est liée à la vitesse du véhicule (par exemple 4 impulsions/mètre parcouru).

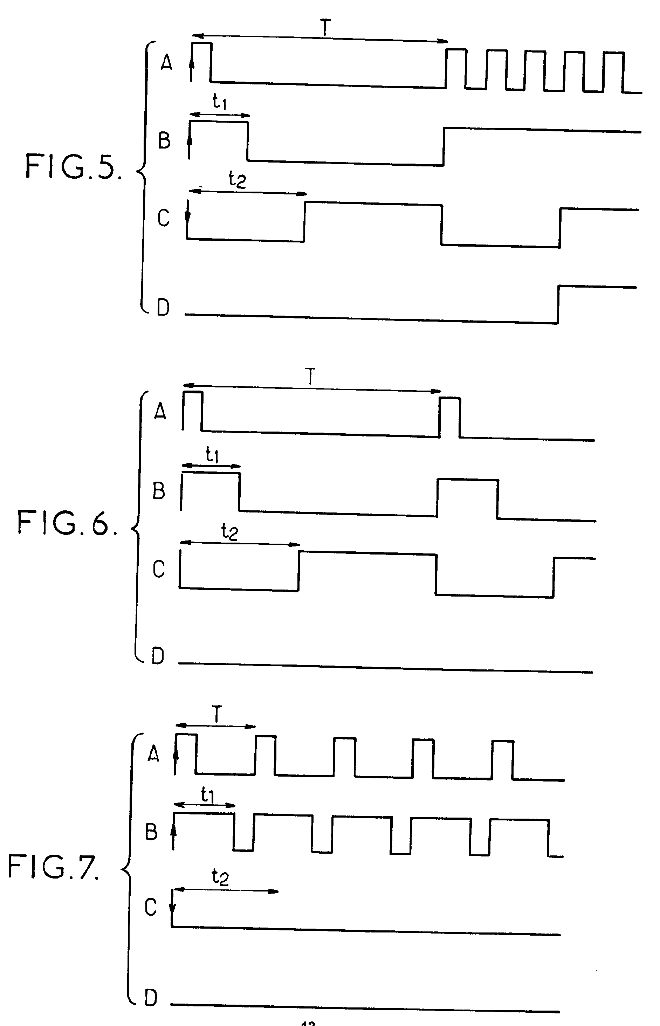

Chaque pulsation de l'information vitesse en A déclenche sur son front montant le monostable 19 qui crée une impulsion de durée $t_1$ de niveau positif en B. Le monostable 19 crée sur son front montant le déclenchement du monostable 20 qui crée une impulsion de durée $t_2$ de niveau négatif en C. Ensuite, une fonction "et" logique est effectuée par la porte 16 entre les informations en B et en C. Quand ces deux informations sont à un niveau haut, on aura en D une information de niveau haut. Si au moins une des deux informations en B ou en C est à un niveau bas, en sortie D on aura un niveau bas (voir figure 5).

Deux cas de fonctionnement peuvent se produire :

$T > t_1$ soit $T > t_2$

ayant $t_1 < t_2$

soit $t_1 < T < t_2$

ou    $T < t_1$

$t_1$ sert à déterminer le seuil de coupure à basse vitesse.

1er cas : $T > t_1$

Si $T > t_2$ ayant $t_1 < t_2$ :

Sur chaque front montant en A, le monostable 19 ne déclenche qu'une seule fois, une impulsion de durée $t_1$ entraînant ainsi sur son front montant le déclenchement du monostable 20.

Le monostable 20 ne déclenche qu'une seule fois une impulsion de durée $t_2$ (impulsion négative).

Les deux signaux B et C ne sont jamais à l'état haut en même temps. En conséquence, le signal en D est en permanence à l'état bas qui correspond à la coupure à basse vitesse (voir figure 6).

Si $t_1 < T < t_2$ :

Sur chaque front montant en A, le monostable 19 ne déclenche qu'une seule fois une impulsion de durée $t_1$ tandis que le monostable 20 se déclenche tous les temps T (à chaque front montant en B), assurant ainsi un niveau bas permanent.

En conséquence, le signal en D est en permanence à l'état bas qui correspond à la coupure à basse vitesse (figure 7).

En conclusion, si $T > t_1$, le signal en D est à l'état bas correspondant à l'état dit de coupure à basse vitesse.

2ème cas : $T < t_1$

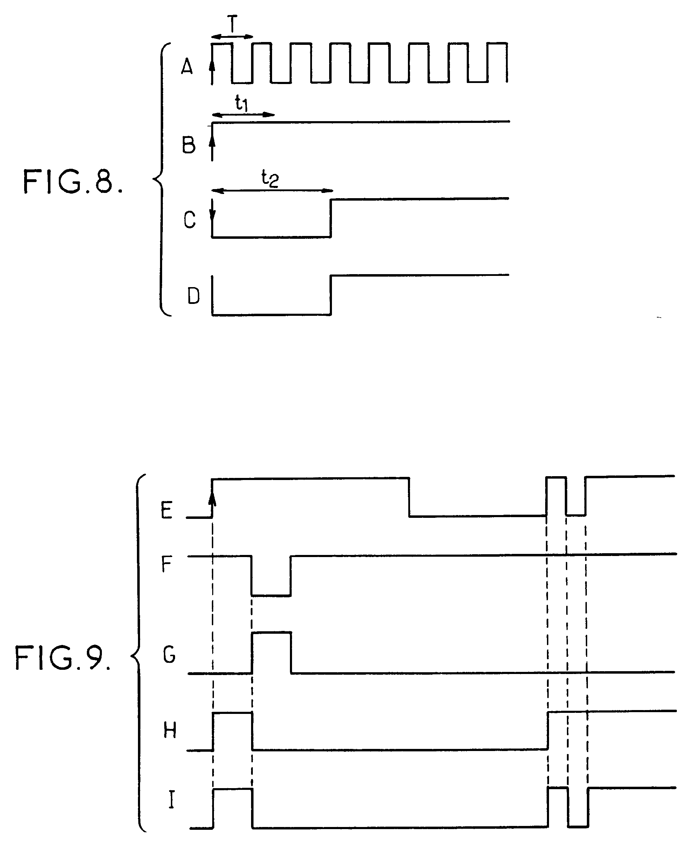

Sur chaque front montant en A, le monostable 19 se réenclenche toutes les T secondes, assurant ainsi un niveau haut permanent ; le monostable 20 se déclenche sur le front montant du signal en B, assurant un signal de niveau bas pendant un temps $t_2$ (voir figure 8).

En conséquence, le signal en D passe après un temps $t_2$ à l'état haut qui correspond à l'état dit de non coupure (la vitesse du véhicule est alors supérieure au seuil de vitesse de coupure).

En conclusion, si $T < t_1$, le signal en D est à l'état haut (après un temps t2) correspondant à l'état dit de non-coupure (la vitesse du véhicule est alors supérieure au seuil de vitesse de la fonction coupure à basse vitesse).

## II. LA FONCTION REGULATION RALENTISSEUR

L'information freinage E issue par exemple du premier manocontact d'une rampe à manocontacts insérée dans le circuit pneumatique ou hydraulique de freinage, sert d'horloge à la fonction bascule de donnée de type "flip-flop" 21.

Sur un front montant d'horloge E, l'état (haut ou bas) de la donnée F est mémorisé en H. Dès que la donnée F tombe à un état bas, correspondant à une demande de régulation du dispositif d'antiblocage des roues, le reset en G passe à un état haut (l'information G est l'inverse de l'information F). A cet état haut du reset G correspond en sortie H un état bas qui dure jusqu'au prochain front montant d'horloge E où le cycle recommence.

La fonction set est à un niveau bas en permanence pour la rendre inactive. Si et seulement si les deux signaux en E et en H sont à l'état haut, le signal en I est à l'état haut, autorisant ainsi la commande du ralentisseur (voir figure 9).

En conclusion, la commande du ralentisseur est effective s'il y a demande de freinage en E et s'il n'y a pas de demande de régulation du dispositif d'antiblocage des roues en F.

S'il y a une demande de régulation du dispositif d'antiblocage des roues en F, la commande du ralentisseur est supprimée en I pendant la demande de régulation en F et au-delà, jusqu'à la prochaine demande de freinage en E.

## III. LA FONCTION SECURITE

Lorsqu'il n'y a pas de défaillance du dispositif d'antiblocage des roues, l'information alarme de ce dispositif est à un niveau haut en K (voir figure 4).

Tant qu'il n'y a pas d'alarme du dispositif d'antiblocage des roues, la fonction sécurité autorise la commande du ralentisseur.

## VI. LA FONCTION COMMUTATION EN SORTIE

Si les trois points D, I, K, issus des fonctions coupure à basse vitesse, régulation ralentisseur et sécurité sont tous à un état haut, alors le point L est à un état haut (fonction logique L = D & I & K). Dans les autres cas, le point L est à un état bas.

Si L est à un état haut (état bas), le transistor de sortie Tr passe en M à l'état bas (état haut), imposant ainsi la fermeture (l'ouverture) du relais Re qui commute (ne commute pas) en N le plus d'alimentation batterie (voir figure 4).

Les quatre points O, P, Q, R, des sorties alimentent (n'alimentent pas) alors en plus alimentation batterie les quatre capteurs de la commande au pied (rampe à manocontacts ou interrupteurs liés au circuit de freinage).

Les principaux avantages de l'invention sont les suivants :

– le fonctionnement est plus sécuritif, car la distance de freinage est optimisée en phase de glissement, du fait de la suppression de l'action du ralentisseur jusqu'à la fin du freinage.

– ou obtient une meilleure compatibilité avec le dispositif d'antiblocage des roues, car dès l'instant où il y a eu une demande de régulation de ce dispositif, la commande au pied du ralentisseur est interdite au moins jusqu'à la fin du freinage ; il n'y a donc pas de risque de déclencher de manière répétitive le dispositif d'antiblocage en cours de freinage.

– l'invention permet de réduire le coût de la fonction "commande au pied" en composants électroniques et en câblage, par rapport à la technique antérieure.

– enfin, l'invention permet d'augmenter la fiabilité de l'installation, du fait de la simplicité des fonctions ainsi que de l'utilisation d'une voie de commutation commune, en sortie de la nouvelle fonction de commande au pied, pour alimenter les manocontacts de la rampe, au lieu d'utiliser plusieurs voies de commutation indépendantes, en sortie de la fonction commande au pied existante, pour exciter les relais de la boîte à contacteurs.

Dans ce qui précède, on a expliqué, à titre d'exemple, que l'information "freinage" et la demande d'activation des différentes positions du ralentisseur étaient obtenues par des manocontacts ou des interrupteurs intégrés au système de freinage (voir page 4, lignes 15 à 26).

Cependant on peut envisager de mettre en oeuvre un mode d'acquisition de la demande de freinage différent, tout en conservant les mêmes principes quant à la fonction "coupure à basse vitesse", à la fonction "régulation ralentisseur" et à la fonction "sécurité" telles qu'elles ont été décrites plus haut avec référence à la figure 4.

On peut en effet utiliser une information de freinage analogique et élaborer à partir de celle-ci les différents seuils de demande d'intervention du ralentisseur.

Il est en particulier possible d'utiliser un capteur de pression fournissant une tension ou un courant proportionnel à la pression observée dans le circuit pneumatique ou hydraulique du circuit de freinage ou bien un potentiomètre ou dispositif inductif délivrant une tension ou un courant proportionnel à la course d'enfoncement de la pédale de frein. Ce dernier dispositif peut être intégré ou non au bloc pédale de freinage. Ainsi, on obtiendra un dispositif délivrant une information analogique tension ou courant proportionnellement à l'enfoncement de la pédale de frein sur une plage angulaire située avant et pendant la montée effective de la pression dans le circuit de freinage.

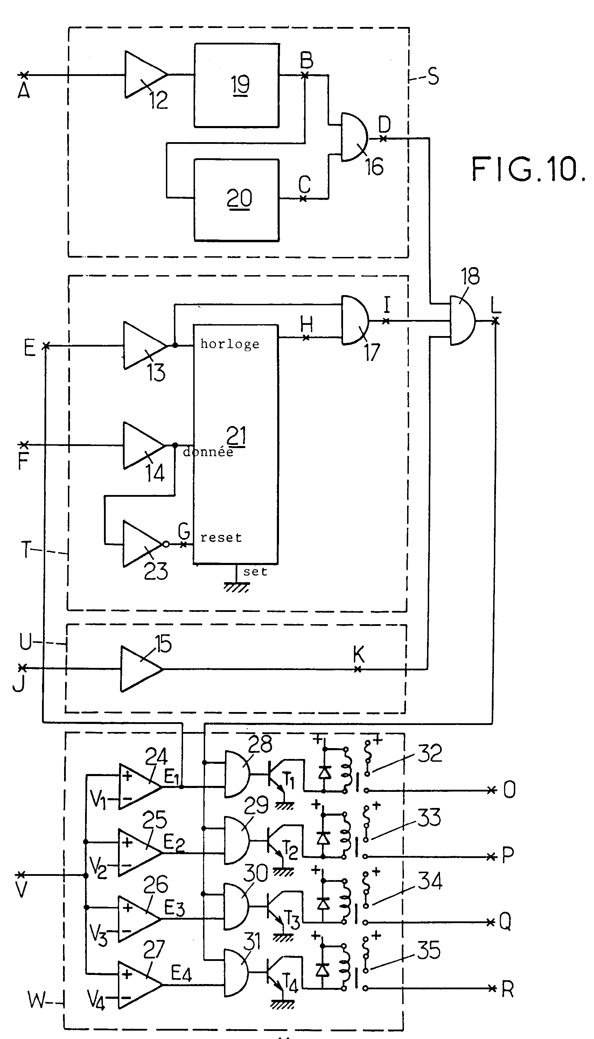

Un exemple d'une telle application est représenté à la figure 10, dans laquelle les modules S, T et U représentant respectivement les fonctions "coupure à basse vitesse ou à l'arrêt", "régulation ralentisseur" et "sécurité" sont identiques à ceux de la figure 4.

Dans cette figure 10, le module supplémentaire W prélève en V l'informaion analogique représentative du freinage et au travers d'une électronique à seuils (comparateurs, amplificateurs opérationnels... 24, 25, 26, 27) détecte les différents seuils de demande d'intervention du ralentisseur.

Ainsi, si la tension en V est supérieure à la tension V1, alors E1 est à l'état haut, entraînant le passage à l'état haut de l'information freinage E.

Si la tension V est supérieure aux tensions V1, V2 V3, V4, alors E1, E2, E3, E4, passent respectivement à l'état haut, signifiant par là une demande de commande du ralentisseur successivement sur les positions 1, 2, 3, 4.

Cette demande est validée si la porte logique "ET" 18 est à l'état haut en sortie L, entraînant alors via les portes "ET" 28, 29, 30, 31, et les transistors T1, T2, T3, T4 la commutation des relais 32, 33, 34, 35 correspondant aux points respectifs O, P, Q, R.

Les points de sortie du dispositif sont directement reliés au boîtier à contacteurs effectuant la commutation de puissance des différentes voies du ralentisseur.

Que l'information freinage soit directement incrémentale ou fournie sous forme analogique, on comprend que le nombre de positions du ralentisseur n'est pas limitatif et en particulier n'est pas limité à quatre. Les commandes du ralentisseur peuvent de même être ou non regroupées, et temporisées ou non à la remise en service, à savoir après une régulation du dispositif d'antiblocage des roues, comme déjà expliqué plus haut.

**Revendications**

1. Installation de freinage de véhicules à dispositif d'antiblocage des roues et ralentisseur à commande contrôlée, du type comportant des premiers moyens d'interdiction de ladite commande du ralentisseur au moins à partir de l'instant d'une demande de régulation adressée audit dispositif d'antiblocage des roues, caractérisée en ce qu'elle comporte des moyens de réautorisation de la mise en service du ralentisseur propres à recevoir une information de freinage et à ne réautoriser cette mise en service qu'à partir de l'instant d'une nouvelle demande de freinage.

2. Installation selon la revendication 1, du type comportant une rampe de manocontacts installée dans la circuiterie hydraulique ou pneumatique du circuit de freinage, ou une rampe d'interrupteurs associée à la pédale de frein, caractérisée en ce qu'une information de freinage est prélevée sur le premier manocontact ou interrupteur de la rampe considérée, pour permettre la réautorisation de la mise en service du ralentisseur, et en ce que les informations fournies respectivement par les manocontacts ou interrupteurs suivants sont utilisées pour déclencher la commande des différentes positions de fonctionnement du ralentisseur.

3. Installation selon la revendication 1, caractérisée en ce qu'une information de freinage est prélevée sur un manocontact ou sur un voyant des feux de stop, ou encore sur un interrupteur commandé par la pédale de frein.

4. Installation selon la revendication 1, caractérisée par la mise en oeuvre d'une information de freinage de type analogique.

5. Installation selon la revendication 4, caractérisée en ce qu'elle comporte, pour l'obtention de l'information de freinage, un capteur de pression fournissant une tension ou un courant proportionnel à la pression observée dans le circuit pneumatique ou hydraulique du circuit de freinage.

6. Installation selon la revendication 4, caractérisée en ce qu'elle comporte, pour l'obtention de l'information de freinage, un potentiomètre ou dispositif inductif délivrant une tension ou un courant proportionnel à la course d'enfoncement de la pédale de frein.

7. Installation selon l'une quelconque des revendications précédentes, caractérisée en ce qu'elle comporte des seconds moyens d'interdiction de la commande du ralentisseur en cas de défaillance du dispositif d'antiblocage des roues.

8. Installation selon l'une quelconque des revendications précédentes, caractérisée en ce qu'elle comporte des troisièmes moyens d'interdiction de la commande du ralentisseur lorsque la vitesse du véhicule tombe au-dessous d'une valeur prédéterminée.

9. Installation selon l'une quelconque des revendications précédentes, caractérisée en ce que lesdits moyens de réautorisation de la mise en service du ralentisseur sont agencés de sorte à ne réautoriser cette mise en service que progressivement, position par position, avec une temporisation à chaque fois entre deux positions successives.

**Patentansprüche**

1. Bremsanlage für Fahrzeuge mit einer Räder-Antiblockiereinrichtung und einem Retarder mit steuerbarer Betätigung, von der Art mit ersten Mitteln zum Blockieren der Betätigung des Retarders zumindest ab dem Zeitpunkt einer an die Räder-Antiblockiereinrichtung gerichteten Regelanforderung, dadurch gekennzeichnet, daß die Anlage Mittel zum Wiederherstellen der Betriebsbereitschaft des Retarders aufweist, die zum Empfang einer Bremsinformation ausgebildet und befähigt sind, die Betriebsbereitschaft erst ab dem Zeitpunkt einer neuerlichen Bremsanforderung wiederherzustellen.

2. Vorrichtung nach Anspruch 1, von der Art mit einer in der hydraulischen oder pneumatischen Schaltung des Bremskreises installierten Reihe von Druckschaltern oder einer dem Bremspedal zugeordneten Reihe von Schaltern, dadurch gekennzeichnet, daß die Bremsinformation vom ersten Druckschalter bzw. Schalter der jeweiligen Reihe abgenommen wird, um die Wiederherstellung der Betriebsbereitschaft des Retarders zu gestatten, und daß die von den folgenden Druckschaltern bzw. Schaltern gelieferten Informationen verwendet werden, um die Betätigung der verschiedenen Funktionsstellungen der Bremse auszulösen.

3. Anlage nach Anspruch 1, dadurch gekennzeichnet, daß die Bremsinformation von einem Druckschalter, von einer Bremsleuchtenanzeige oder von einem vom Bremspedal gesteuerten Schalter abgenommen wird.

4. Anlage nach Anspruch 1, gekennzeichnet durch den Einsatz einer Bremsinformation von analogem Typ.

5. Anlage nach Anspruch 4, dadurch gekennzeichnet, daß sie zur Gewinnung der Bremsinformation einen Druckfühler aufweist, der eine Spannung oder einen Strom liefert, welche(r) dem im pneumatischen oder hydraulischen Kreis des Bremskreises beobachteten Druck proportional ist.

6. Anlage nach Anspruch 4, dadurch gekennzeichnet, daß sie zur Gewinnung der Bremsinformation ein Potentiometer oder eine induktive Einrichtung aufweist, das bzw. die eine Spannung oder einen Strom liefert, welche(r) dem Betätigungsweg des Bremspedales proportional ist.

7. Anlage nach einem der vorhergehenden Ansprüche, dadurch gekennzeichnet, daß sie zweite Mittel zum Blockieren der Betätigung des Retarders im Falle eines Betriebsausfalles der Räder-Antiblockiereinrichtung aufweist.

8. Anlage nach einem der vorhergehenden Ansprüche, dadurch gekennzeichnet, daß sie dritte Mittel zum Blockieren der Betätigung des Retarders im Falle eines Abfalles der Fahrzeuggeschwindigkeit unter einen vorgegebenen Wert aufweist.

9. Anlage nach einem der vorhergehenden Ansprüche, dadurch gekennzeichnet, daß die Mittel zum Wiederherstellen der Betriebsbereitschaft des Retarders so ausgebildet sind, daß sie die Betriebsbereitschaft nur progressiv und stufenweise mit einer Verzögerung zwischen jeweils zwei aufeinanderfolgenden Stufen wiederherstellen.

**Claims**

1. Vehicle braking equipment with a wheel anti-locking device and retarder with monitored control, of the type incorporating first means of inhibiting the said retarder control at least as from the time of a regulation request sent to the said wheel anti-locking device, characterised in that it incorporates means for re-enabling the actuation of the retarder suitable for receiving braking data and re-enabling this actuation only as from the time of a new braking request.

2. Equipment according to claim 1, of the type incorporating a bank of pressure controllers installed in the hydraulic or pneumatic circuitry of the braking circuit, or a bank of switches associated with the brake pedal, characterised in that braking data are taken from the first pressure controller or switch on the bank in question, to allow the re-enabling of the actuation of the retarder, and in that the data supplied respectively by the following pressure controllers or switches are used to trigger the control for the different operating positions of the retarder.

3. Equipment according to claim 1, characterised in that braking data are taken from a pressure controller or a stop light indicator light, or again a switch controlled by the brake panel.

4. Equipment according to claim 1, characterised by the use of braking data of the analogue type.

5. Equipment according to claim 4, characterised in that it incorporates, for obtaining braking data, a pressure sensor supplying a voltage or current proportional to the pressure measured in the pneumatic or hydraulic circuit of the braking circuit.

6. Equipment according to claim 4, characterised in that it incorporates, for obtaining braking data, a potentiometer or inductive device supplying a voltage or current proportional to the extent to which the brake panel is pressed.

7. Equipment according to any of the preceding claims, characterised in that it incorporates second means for inhibiting the retarder control in the event of a failure of the wheel anti-locking device.

8. Equipment according to any of the preceding claims, characterised in that it incorporates third means of inhibiting the retarder control when the speed of the vehicle falls below a predetermined value.

9. Equipment according to any of the preceding claims, characterised in that the said means for re-enabling the actuation of the retarder are arranged so as to re-enable this actuation only progressively, position by position, with a time delay on each occasion between two successive positions.

# FIG.1.

# FIG.2.

# FIG.3.

# FIG.4.

FIG.5.

FIG.6.

FIG.7.

FIG.8.

FIG.9.

EP 0 326 462 B1

FIG.10.